# EUROPEAN PATENT APPLICATION

(11) **EP 1 271 382 A1**
(43) Date of publication of application: **02.01.2003**
(21) Application number: 02254335.9
(22) Date of filing: 20.06.2002
(51) Int. Cl.: G06F 17/60

(54) **Patent portfolio management method**

(30) Priority: 29.06.2001 GB 0116007
(71) Applicant: Nokia Corporation, 02150 Espoo (FI)
(72) Inventor: Frain, Timothy, Camberley, Surrey GU14 1DU (GB)
(74) Representative: Haws, Helen

(57) **Abstract**

A method and apparatus for reducing the risk associated with reducing the cost of maintaining intellectual property rights for a first legal entity by transferring title in the intellectual property right with the grant back of non-exclusive royalty free license to use the invention there being a commitment from the second legal entity to maintain the intellectual property right enforceable, and the option for the first legal entity to regain title in the intellectual property right from the second legal entity to the first legal entity on payment of predetermined consideration. The second legal entity being otherwise free to utilise the intellectual property right for its own financial gain.

## Description

The invention relates to intellectual property, and in particular problems arising from the nature of some intellectual property rights that require certain acts to be performed for their continued existence.

Patents are a legal monopoly developed to allow the title holder of the patent the right to stop others from benefiting from the invention claimed. This legal monopoly is granted in return for disclosure of the claimed invention. A granted patent is enforceable in most jurisdictions for a period up to 20 years from the date of filing the application. This is a relatively long period and so to reduce the number of monopolies in existence, in most jurisdictions renewal fees must be paid periodically in order to keep a patent in force. These fees tend to become increasingly high as the length of the monopoly increases. The rationale behind the requirement for the payment of fees is to dissuade the title holders of the patent from maintaining patents that are no longer commercially valuable.

The problem that the patent holders face is that often if a renewal fee is not paid within a prerequisite period, the patent lapses and cannot be revived. Essentially, the lapse of a patent is final and irreversible i.e. the right to a monopoly is lost for ever which often leads to an over cautious approach to the maintenance of patents.

In accordance with an aspect of the present invention there is provided a method of reducing the risk associated with reducing the cost of maintaining intellectual property rights for a first legal entity, comprising creating a contractual relationship between the first legal entity and a second legally independent entity, the contractual relationship having the following legally binding obligations: commitment from the second legal entity to pay such fees and undertake to perform such acts at the expense of the second legal entity as are required to maintain the intellectual property right enforceable, the commitment being made for a predetermined period and resulting in a monetary cost to the second legal entity; commitment to transfer title in an intellectual property right from the first legal entity to the second legal entity, any valuable consideration provided to the second legal entity being of less value than the monetary cost to be incurred by the second legal entity; and commitment to grant during the predetermined period the right to regain title in the intellectual property right from the second legal entity for predetermined consideration; the second legal entity being otherwise free to exploit the intellectual property right for financial gain during the predetermined period.

For the purposes of this application a legally independent entity is a legal entity that is not a parent nor a wholly or partly owned subsidiary, of the legal entity it is separate from.

The invention allows the transfer of a single intellectual property right to a separate legal entity or the transfer of multiple intellectual property rights to a separate or many separate legal entities. For the purposes of illustration the apparatus involved in effecting the invention for a single intellectual property right will be described.

A sophisticated IPR holder will periodically review its existing portfolio to ascertain if any of the rights it currently holds are no longer useful in supporting its business or other aims. One such intellectual property right is a granted patent, others may be pending applications, registered design rights or other similar rights. If a particular patent is identified to no longer be relevant to supporting the business or other needs of the legal entity that holds the title, a decision can be made as to what to do with the superfluous right. Options available prior to the present invention may have been to a) sell the right to someone else, i.e. transfer the right for financial consideration, b) terminate the right by actively abandoning it or by failing to pay the next maintenance fee due, or c) continue paying the maintenance fees for fear that one day the right will again become useful due to as yet unforeseen market or other conditions.

Option a) is only viable if there is another company willing to pay for the patent say, to be transferred. In many instances this will not be the case. If the patent is no longer important to the title holder, title holders with similar requirements are also unlikely to see any value for the patent. If the patent can be sold to another entity that may or may not be a competitor of the title holder, again financial gain can be made and a suitable legal contract established that preserves the necessary rights between the parties. An agreement in these circumstances is based on the value to the prospective purchaser of the patent and the financial compensation made to the proprietor. The terms will be sorted out in accordance with the relative weights of the consideration provided by each party; in short, a typical transaction between parties.

Option b), the termination of the patent, is an irreversible act that requires either knowledge or speculation about the future or the willingness to accept the consequences of making an incorrect judgement at a particular point in time.

If the circumstances are such that neither options a) or b) are viable the only remaining option is c) requiring the ongoing payment of renewal fees with all the attendant costs. When this is a single case the costs can be significant for a small entity. When a large number of cases fall into this categories even large companies will find the costs associated with this approach significant.

In embodiments of the present invention a fourth inventive option is available to the title holder. Where the identified right, say a granted patent, has no perceived value there would be no purpose in entering into a contractual relationship regarding its ownership. In particular with a patent even giving it away is not an option as the ongoing renewal or maintenance costs prevent another party accepting it as a gift unless it has a rather high perceived value. In the circumstances under consideration even the transfer for no financial consideration would therefore be inappropriate.

Under embodiments of the present invention, however, this is in fact what takes place. The patent, for example, is transferred to a third party. It is significant that this third party has no connection with the current title holder as an important benefit of the present invention is to remove the financial burden of maintaining the patent. The more financially as well as legally independent the parties are, the better. As stated earlier one option would be merely to abandon the case but this would be irreversible. The transfer is made with two possible provisos, one is that the proprietor continues to be able to use the invention as otherwise operational problems may ensue. If the proprietor is confident that this is never going to be the case for a particular patent, this proviso may be dropped. The other proviso is that the patent is maintained in force in order to potentially avoid the irreversible nature of the decision, which is the main reason for not simply abandoning the patent by paying no further maintenance fees. The length of the agreement will vary depending on the circumstances and particularly how long it is agreed that the patent should be kept in force.

So what do the assignor and assignee gain from this arrangement? On the face of it nothing. There is no financial consideration and yet there is an undertaking from the assignee to commit not inconsiderable costs in the future. Also the assignor although not financially inconvenienced by transferring the title to another entity has not achieved its aim to reverse the irreversibility of an abandonment decision. To do so the contractual agreement must cater for the eventuality that the status quo can be restored i.e. the assignor must be in the position that title can be restored to him if predetermined conditions are met. It is here that the benefit to the assignee can also be achieved. By setting suitable financial compensation for the future 'buyback' of the patent, the assignor is insuring itself against a wrong decision and the assignee balances the outgoing payments against the financial compensation should the assignor undergo a change of mind. In addition to the future possible compensation and to ensure that the assignor has no continued interest in the patent other than the undertaking to allow the patent to be bought back in the future, the assignee is free to use the patent unencumbered as the title holder. The assignee may then wish, for example, to enter into licensing agreements under the patent.

It can be the case that a patent or other intellectual property right is much more valuable to those operating outside a field of commerce than to those operating within it. This is due at least in part to the complicated relationships between competitors and the way in which the enforcement of rights can upset the equilibrium. For example, often major corporations operating in a similar field and each having substantial patent holdings that the other may be using, enter into cross licenses. The marginal value of enforcing additional patents against competitors is very small whereas an independent legal entity, particularly one not operating in the same field, may be able to extract significant value from such additional patents. In particular there is less risk of, or opportunity for, retaliation. As a result these levers are unlikely to be used unless the circumstances are exceptional. In the hands of a party that has no connection with the previous rights holder and who is not operating in the same market place, the intellectual property right becomes much more valuable. With no business relationship to unsettle, the licences to use can be negotiated for financial gain. If the third party is chosen carefully to be able to use the patent against those most likely to infringe without business consequence, the proposition of a free assignment becomes more attractive.

In order for the assignor to have been relieved of the financial obligation to pay future renewal costs, there is ideally no financial entanglement between the parties other than through the contractual relationship in accordance with embodiments of the present invention. The two parties are financially independent, ideally the financial well being of one entity should not be dependent on the financial well being of the other in order for the assigning entity to get the full benefit of transferring the liability for future renewal fees. The relationship between the parties will be not unlike that between the insured and the insurer. This allows the risk to be taken on independently.

As well as the advantage to the well chosen assignee that a patent is more valuable outside the industry than within it, there are additional non tangible advantages to the assignor. Provided you have a licence to use a particular intellectual property right giving a legal monopoly, it is better for the right to exist than for it not exist. This is because the mere existence of a legal monopoly relevant to a particular market has an impact on the business dynamics of entities operating in that market. The beneficiary of a free license has a competitive advantage over (unlicensed) competitors in these circumstances. The impact is not easily quantifiable as part of that impact will simply be business unease at operating in an environment where intellectual property rights may be a problem. It may go further, however, and result in analysis work on the extent and enforceability of the right which would translate to a real monetary cost. Additionally the existence of a legal monopoly may change the behaviour of an operator in the relevant market. All these possibilities mean that provided an intellectual property right poses no threat to a particular entity, perhaps because of a licence agreement, there are advantages to the existence of that right.

The details of the relationship between the parties would generally be set out in a legally binding agreement with agreed penalties on both sides for failure to comply with the terms of the agreement.

The benefit in the inventive solution of embodiments of the present invention has been discussed for a single granted patent. However, the benefits to both parties to the agreement increase when the solution is implemented for many such intellectual property rights. Significant costs are moved from the assignor when multiple rights are involved and the opportunities for licensing technology packages and the chances of a wrong decision resulting in the lucrative 'buyback' arrangement are increased for the assignee.

To implement the invention in practice it is advantageous to have a certain decision making regime and systems in order to track the status of intellectual property rights. These will now be described with reference to the figures.

In accordance with another aspect of the invention there is provided apparatus for reducing the risk associated with reducing the cost of maintaining intellectual property rights to a first legal entity comprising means for creating a contractual relationship between the first legal entity and a second legally independent entity, the means for creating a contractual relationship including the following: means for transferring title in an intellectual property right from the first legal entity to the second legal entity; means for granting a royalty free non-exclusive license to use the intellectual property right from the second legal entity to the first legal entity; means for ensuring commitment from the second legal entity to pay such fees and undertake to perform such acts as are required to maintain the intellectual property right enforceable, the commitment being made for a predetermined period; means for granting the right to regain title in the intellectual property right from the second legal entity to the first legal entity on payment of predetermined consideration during the predetermined period; means for ensuring the second legal entity is otherwise free to exploit the intellectual property right during the predetermined period; wherein any valuable consideration provided to the second legal entity for the transfer of title is of less value than the monetary cost to be incurred by the second legal entity.

In accordance with yet another aspect of the invention there is provided apparatus for reducing the risk associated with reducing the cost of maintaining intellectual property rights to a first legal entity comprising a data base having records related to respective intellectual property rights including maintenance fees and associated payment dates: means for identifying intellectual property rights for which no further maintenance costs are desirable; and a contractual agreement between the first legal entity and a second legally separate entity, for transferring the title in the identified intellectual property rights from the first legal entity to the second legal entity, granting a royalty free non-exclusive license to use the intellectual property right from the second legal entity to the first legal entity, providing a commitment from the second legal entity to pay such fees and undertake to perform such acts as are required to maintain the intellectual property right enforceable, granting the first legal entity the option to regain title in the intellectual property right during the predetermined period from the second legal entity to the first legal entity on payment of predetermined consideration, and ensuring the second legal entity is otherwise free to exploit the intellectual property right during the predetermined period, the commitment being made for a predetermined period.

In accordance with a further aspect of the invention there is provided a system for reducing the risk associated with reducing costs associated with the maintenance of intellectual property rights for a first legal entity comprising a written agreement ensuring commitment from a second legal entity to pay such fees and undertake to perform such acts as are required to maintain the intellectual property right enforceable, the commitment being made for a predetermined period; a written assignment agreement transferring title in an intellectual property right from the first legal entity to the second legal entity; a written agreement providing the right to regain title in the intellectual property right from the second legal entity to the first legal entity on payment of predetermined consideration during the predetermined period; means for ensuring the second legal entity is otherwise free to utilise the intellectual property right during the predetermined period.

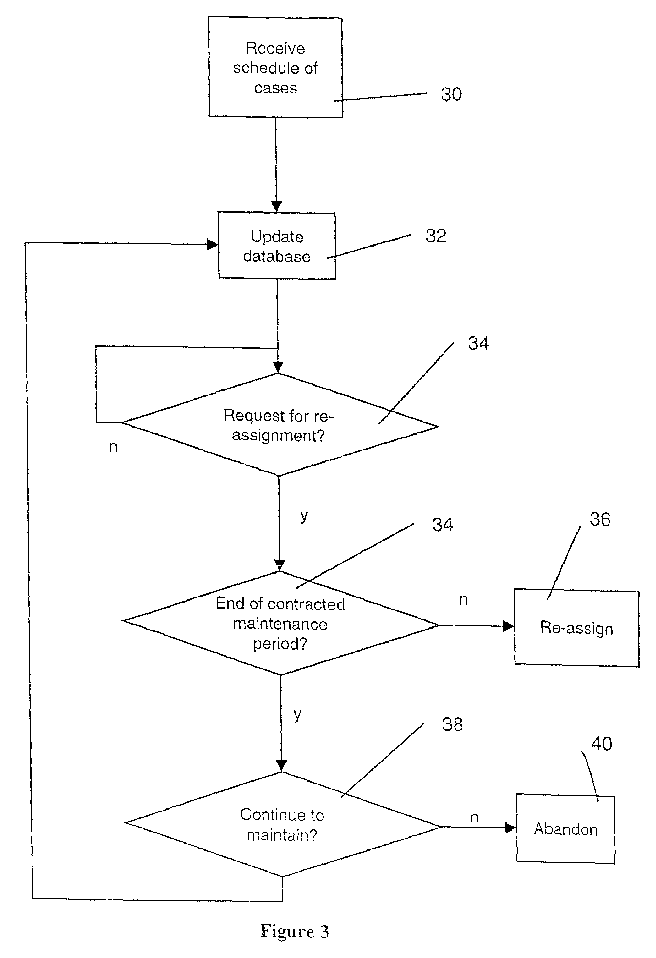

The invention will now be described in greater detail with reference to Figures 1 to 3 of the drawings:
Figure 1 is as schematic representation of an embodiment of the invention;
Figure 2 is a flow chart according to an embodiment of the invention; and
Figure 3 is a further flow chart according to the embodiment of Figure 2.

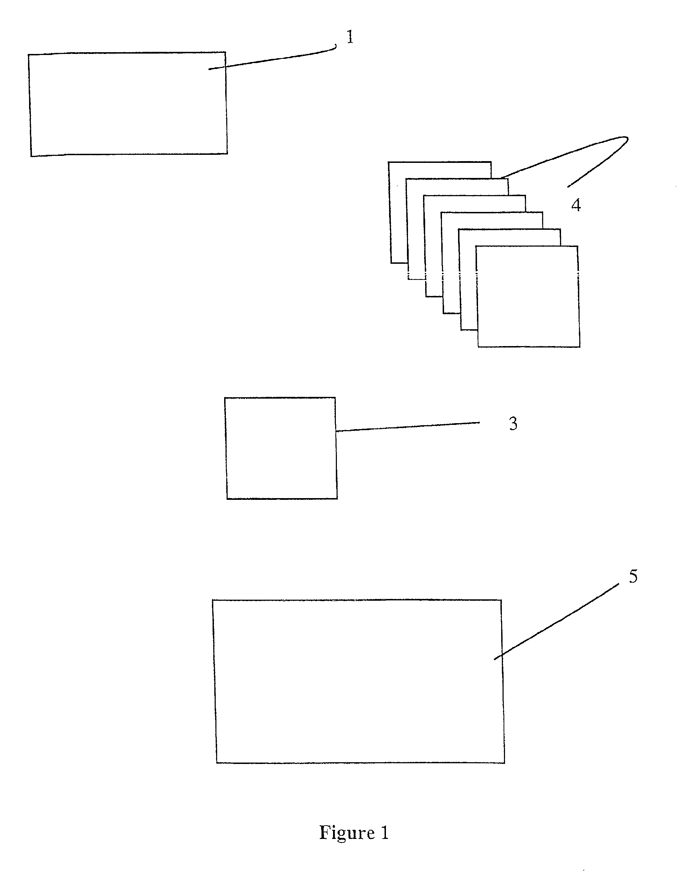

By way of example, the present invention will be discussed with reference to implementation in a corporation holding a relatively large intellectual property portfolio. Figure 1 illustrates the apparatus. For such a large corporation with, say, thousands of intellectual property rights, details of the rights held will be recorded. One possibility is that they will be recorded on a computer database 1. The database 1 will typically hold details of the priority date (if applicable) filing date, and the grant or issue date of the intellectual property right. Again the discussion will refer to patents although the skilled man will be aware of other such relevant rights. The data will be at least sufficient to determine the dates on which renewal fees for a patent fall due.

On a periodic basis each of the granted patents will be reviewed for current and future value to the corporation. This may be for example annually, or biannually for all cases. As another option a smaller number of cases may be reviewed on a cyclic basis. The review date may be related to the renewal fee date for the group of cases. As an example the cases with renewal fees due in the following three months could be reviewed. The whole portfolio could then be reviewed in one year if broken down into four groups. It may not be necessary for an annual review, in which case the database 1 could hold in the record a next date for review. The speed with which different technologies move on could be a guide to the review intervals. The importance of the case could also provide a mechanism for determining the review period. The more important cases are likely to be more valuable over a longer period and accordingly need not be reviewed with a mind to dropping them quite so regularly. Other intervals for review and mechanisms for determining which cases should be reviewed will be available to the skilled man. Optionally the assessments could be carried out as a one off exercise to reduce costs.

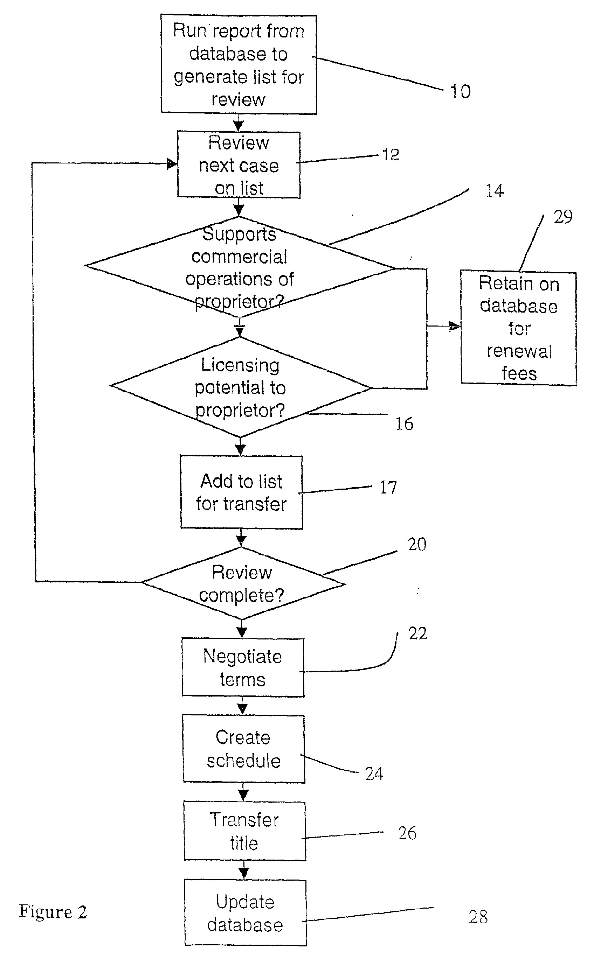

Turning to Figure 2 in the current example a report is run quarterly 10 to list the cases with renewal fees due in the next three months. The cases on the list are reviewed 12 and candidates for assignment to a separate independent company determined by assessing the cases. This assessment may have two parts, the first is an evaluation of the importance to supporting and protecting the commercial operation of the business 14. The other is the licensing potential to the assignor which may be greater outside the corporations business area 16. Those cases for which it is determined that there is no current value to the corporation in either of these respects is listed for transfer to a third party 18. The risk associated with abandonment of each entry on the list is assessed and associated with a period of enforcement that would allow the risk to be offset. For example, if the risk of abandoning is considered to be very high, the period of enforcement by the third party is correspondingly long and the 'buyback' financial consideration sufficiently high to compensate for both the renewal payments and the risk that there will be no 'buyback' at the end. Correspondingly if the risk is low, the period of enforcement required may be lower. The financial compensation would still need to be high enough for the risk, when taken together with the other cases being transferred and the licensing potential for the assignee, to be an attractive prospect to the assignor.

The 'buyback' fee could be determined on a case by case basis to account for the relative potential of the patents. Other options may include assessing the buyback figures having regard to the cost involved with maintaining the patent in force. These costs will be higher annually for older patents but could equally be higher for patents with a longer remaining term if the period during which buyback could be accomplished was relatively long. As another option, if there are a sufficient number of cases for a statistical average to make sense, a flat rate could be agreed. The skilled man can imagine other such terms on which the parties may agree. For example, the buy back fee may be dependent on the number of those other licenses that have been drawn up. Naturally the contract could allow for the period of maintenance of the patent to be extended should the parties agree.

Once the review is complete 20 and the list of rights has been compiled, a document transferring the rights to the third party can be drawn up which uniquely identifies the rights to be transferred 3. If the relationship is new, the terms of the agreement may be negotiated and a schedule of cases created 22, although prior to the assessment there would generally be an agreement in principle. The terms negotiated would then specifically relate to the maintenance period and the buyback cost. Perhaps a small transfer fee where the assignor pays the assignee may be required. Any transfer fee should not cover the future maintenance payments. If the arrangement is ongoing the list of cases to be transferred, the period for maintenance and the buyback or re-assignment fee can be appended as a schedule to an existing agreement 24. Once agreement has been reached the contract or contracts will be executed and title in the rights will be transferred 26. Title documentation such as letters patent documents may be transferred at the same time 4. In many instances to secure title the transfer needs to be recorded at the relevant patent office or offices. From this point onwards the third party is free to exploit the intellectual property rights in any way provided it does not conflict with the buyback commitment or the non-exclusive license to use by the assignor if such an agreement exists. No longer having responsibility for renewals, the assignor will update the database 28 for renewals accordingly. There may be a requirement to maintain entries so that cases can subsequently be reviewed for decisions on whether or not to invoke the buyback clause in the agreement. This may instead be left to circumstances as if there is a sufficient need it is likely to become apparent.

The third party having taken on the title in the intellectual property rights will take the necessary precautions to maintain the intellectual property rights in force for the agreed duration. This may involve employing an outside agency to pay the maintenance fees. Instead or as well as there will be a requirement for a database holding the same information on renewal dates and any other information necessary or desirable in keeping to the commitment to maintain the rights. On receiving the schedule of cases 30, the assignee will update the records it holds to include the new rights requiring the payment of maintenance fees 32. Again monitoring of the portfolio would be desirable to ensure opportunities for licensing are taken and to review the portfolio itself once the contractually agreed term for maintenance of the patent has past. If at any point during the maintenance period the assignor decides that the decision to abandon the case was premature, the right can be reassigned on payment of the agreed fee. At this point a further assignment will be executed transferring all rights back to the original assignor. The assignor may, however, have to take the right encumbered with any licences that have been agreed between the assignee and other parties in the interim period. If the assignee receives such a request 32, the maintenance term is checked 34 and if it is within the prescribed period for that specific patent a re-assignment contract is drawn up, taking into account any intervening licences that have been agreed 36.

In the light of the foregoing description, it will be clear to the skilled man that various modifications may be made within the scope of the invention.

The present invention includes any novel feature or combination of features disclosed herein either explicitly or any generalisation thereof irrespective of whether or not it relates to the claimed invention or mitigates any or all of the problems addressed.

## Claims

1. A method of reducing the risk associated with reducing the cost of maintaining intellectual property rights for a first legal entity, comprising creating a contractual relationship between the first legal entity and a second legally independent entity, the contractual relationship having the following legally binding obligations:
commitment from the second legal entity to pay such fees and undertake to perform such acts at the expense of the second legal entity as are required to maintain the intellectual property right enforceable, the commitment being made for a predetermined period and resulting in a monetary cost to the second legal entity;
commitment to transfer title in an intellectual property right from the first legal entity to the second legal entity, any valuable consideration provided to the second legal entity being of less value than the monetary cost to be incurred by the second legal entity; and
commitment to grant during the predetermined period the right to regain title in the intellectual property right from the second legal entity for predetermined consideration;
the second legal entity being otherwise free to exploit the intellectual property right for financial gain during the predetermined period.

2. A method according to claim 1 wherein the transfer of title from the first to the second entity is free or at a nominal cost

3. A method according to claim 1 or claim 2, wherein the any valuable consideration provided to the second legal entity is monetary consideration.

4. A method according to any preceding claim wherein the right to exploit the intellectual property right extends beyond the predetermined period.

5. A method according to any preceding claim wherein the contractual relationship has the legally binding obligation to the grant of a royalty free non-exclusive license to use the intellectual property right from the second legal entity to the first legal entity.

6. A method according to any preceding claim wherein the license covers the enforceable life of the intellectual property right.

7. A method according to any preceding claim wherein prior to entering into the contractual agreement the parties are financially independent.

8. A method according to any preceding claim wherein the predetermined consideration is related to the length of the predetermined period.

9. A method according to any preceding claim wherein the predetermined consideration is related to license remuneration achieved by the assignee under the intellectual property right.

10. A method according to any preceding claim wherein the predetermined consideration is related to the age of the intellectual property right.

11. A method according to any preceding claim wherein the intellectual property right is a patent.

12. A method according to any one of claims 1 to 10, wherein the intellectual property right is a registered design.

13. A method according to any one of claims 1 to 10, wherein the intellectual property right is a registered trade mark.

14. A method according to any preceding claim wherein the method is applied to a plurality of intellectual property rights.

15. Apparatus for reducing the risk associated with reducing the cost of maintaining intellectual property rights to a first legal entity comprising
means for creating a contractual relationship between the first legal entity and a second legally independent entity, the means for creating a contractual relationship including the following:
means for transferring title in an intellectual property right from the first legal entity to the second legal entity;
means for granting a royalty free non-exclusive license to use the intellectual property right from the second legal entity to the first legal entity;
means for ensuring commitment from the second legal entity to pay such fees and undertake to perform such acts as are required to maintain the intellectual property right enforceable, the commitment being made for a predetermined period;
means for granting the right to regain title in the intellectual property right from the second legal entity to the first legal entity on payment of predetermined consideration during the predetermined period;
means for ensuring the second legal entity is otherwise free to exploit the intellectual property right during the predetermined period;
wherein any valuable consideration provided to the second legal entity for the transfer of title is of less value than the monetary cost to be incurred by the second legal entity.

16. Apparatus for reducing the risk associated with reducing the cost of maintaining intellectual property rights to a first legal entity comprising
a data base having records related to respective intellectual property rights including maintenance fees and associated payment dates:
means for identifying intellectual property rights for which no further maintenance costs are desirable; and
a contractual agreement between the first legal entity and a second legally separate entity, for transferring the title in the identified intellectual property rights from the first legal entity to the second legal entity, granting a royalty free non-exclusive license to use the intellectual property right from the second legal entity to the first legal entity, providing a commitment from the second legal entity to pay such fees and undertake to perform such acts as are required to maintain the intellectual property right enforceable, granting the first legal entity the option to regain title in the intellectual property right during the predetermined period from the second legal entity to the first legal entity on payment of predetermined consideration, and ensuring the second legal entity is otherwise free to exploit the intellectual property right during the predetermined period, the commitment being made for a predetermined period.

17. Apparatus according to claim 15 or claim 16 wherein the means for commitment comprises a legal agreement

18. Apparatus according to any one of claims 15 to 17 wherein the means for commitment comprises a data base holding information sufficient to determine dates on which maintenance fees are payable

19. Apparatus according to any one of claims 15 to 18 wherein the apparatus comprises a computer.

20. Apparatus according to any one of claims 15 to19 wherein the computer is arranged to prepare the legal instruments for effecting the legal consequences.

21. Apparatus according to any one of claims 15 to 20 wherein the computer is arranged for calculating the consideration due.

22. Apparatus according to any one of claims 15 to 21 wherein the computer records the transactions.

23. Apparatus according to any one of claims 15 to 22 wherein the computer is arranged to provide reminders for reviewing the existing portfolio.

24. A system for reducing the risk associated with reducing costs associated with the maintenance of intellectual property rights for a first legal entity comprising
a written agreement ensuring commitment from a second legal entity to pay such fees and undertake to perform such acts as are required to maintain the intellectual property right enforceable, the commitment being made for a predetermined period;
a written assignment agreement transferring title in an intellectual property right from the first legal entity to the second legal entity;
a written agreement providing the right to regain title in the intellectual property right from the second legal entity to the first legal entity on payment of predetermined consideration during the predetermined period; and
means for ensuring the second legal entity is otherwise free to utilise the intellectual property right during the predetermined period;
wherein any valuable consideration provided to the second legal entity for the transfer of title is of less value than the monetary cost to be incurred by the second legal entity.
